# EUROPEAN PATENT SPECIFICATION

(11) **EP 1 764 687 B1**
(45) Date of publication and mention of the grant of the patent: **03.11.2010**
(21) Application number: 05020248.0
(22) Date of filing: 16.09.2005
(51) Int. Cl.: G06F 9/445, G06F 11/14

(54) **Method for restoring a booted system**
Verfahren zum Wiederherstellen eines gebooteten Systems
Procédé pour restaurer un système après amorçage

(43) Date of publication of application: 21.03.2007
(73) Proprietor: Moxa Technologies Co., Ltd., Shing Tien City, Taipei Hsien (TW)
(72) Inventor: Sheng-Yi, Yu, Wanhua District; Taipei City (TW)
(74) Representative: Glawe, Delfs, Moll

(56) References cited:
- WO-A-2004/097642
- US-A1- 2005 132 179
- "Recovering a Linux System"[Online] 2000, XP002353444 Retrieved from the Internet: URL:http://www.linuxcertified.com/linux-re covery.html> [retrieved on 2005-11-10]
- "The Linux Booting Process Unveiled"[Online] 1 March 2004 (2004-03-01), XP002353332 Retrieved from the Internet: URL:http://www.pycs.net/lateral/stories/23 .html> [retrieved on 2005-11-10]
- "Managing Flash Memory with Embedded Linux"[Online] September 2005 (2005-09), XP002353333 Retrieved from the Internet: URL:http://www.ssiembedded.com/embedded_li nux_managing_memory.html> [retrieved on 2005-11-10]

## Description

### 1. Field of the Invention

The present invention relates to a method for restoring a booted system, and more particularly, to such a method for a device of an embedded Linux system to boot normally.

### 2. Description of Related Art

According to the definition of the Institute of Electrical Engineers (IEE), an "embedded System" is a control, monitoring, or accessory equipment, machine, or even a factory-operating device, and the embedded system is integrated with a computer software and hardware that can meet the "Custom-made" principle. In other words, it is a system developed according to a certain specific application. Since the embedded system can enhance the stability and portabiliy of a product, lower the cost, and add specific functions, etc, therefore the embedded systems are extensively used. At present, the common embedded systems include VxWORK, QNX, Palm OS, Windows CE, and Linux, etc, and wherein the embedded Linux system has an advantage of free license, and thus the embedded Linux system is used by most users.

The development of the embedded Linux system requires the following three basic elements: a boot loader, a Linux kernel and a root file system, and the Linux kernel and the root file system are read-only files such as CRAMFS or ROMFS installed into a flash memory for users to boot a system. Since the root file system is a read-only file, users cannot write an application program into the root file system, and thus making some of the application programs unusable. Therefore, related R&D engineers load the root file system into a RAM disk, so that the application program can write in the root file system in the RAM disk. However, the root file system in the RAM disk will be totally erased when the system is turned off, and it is necessary to repeat the foregoing procedure for a use of next time, and such arrangement is very inconvenient.

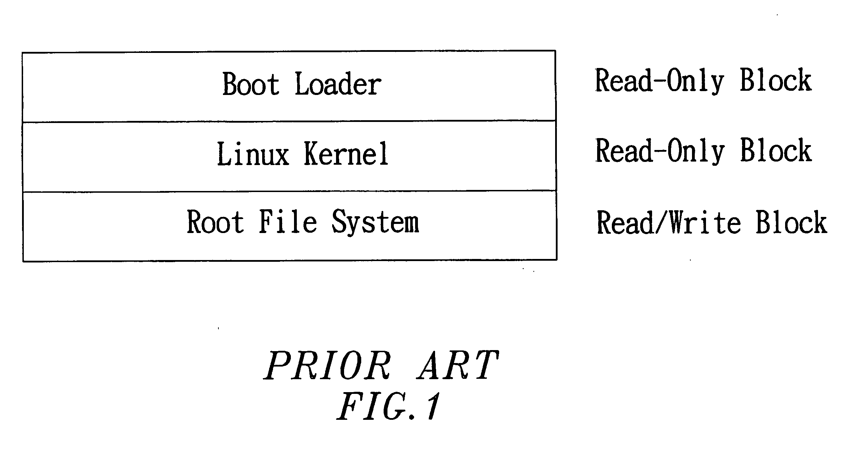

To solve the foregoing problem, some manufacturers store the Linux kernel and the root file system in separate blocks of a flash memory. Referring to Fig. 1, the prior art flash memory is divided into three blocks, and the boot loader, the Linux kernel and the root file system are stored separately in different blocks, and the two blocks stored with the boot loader and the Linux kernel are set as read-only blocks, and the block stored with the root file system is set as a read/write block, such that the root file system can write in other application programs such as JFFS2, EXT2 and EXT3.

However, such arrangement still has a serious issue. If a power failure occurs while the root file system is writing in a file, the root file system will be damaged and unrepairable. As a result, the system cannot be booted.

An embedded digital processing system with self-configured operation is known, which switches between a more or less large number of different configurations in order to find out a configuration as a correct one (WO 2004/097642 A1). If the first configuration is not the correct one, the system reboots and switches to the second configuration. These configurations are not "damaged", they are only different if different preferably devices etc. are mounted. The configurations obviously are stored in read-only memories and cannot be changed. There is no disclosure that the system might continue to work with a reduced functionality if no suitable configuration is found.

### SUMMARY OF THE INVENTION

The present invention has been accomplished under the circumstance in view. It is therefore the main objective of the present invention to use a read-only block and a read/write block of a flash memory of a device to separately store a mini root file system and a user root file system, and install a detect program to the mini root file system, such that when the device is booted, the detect program will be executed first to detect whether or not the user root file system is damaged in order to determine using the mini root file system or the user root file system as the embedded Linux system. The present invention can prevent the device from being unusable due to the damage of the root file system.

### BRIEF DESCRIPTION OF THE DRAWINGS

Fig. 1 is a specification table of a prior art flash memory.
Fig. 2 is a specification table of a flash memory according to the present invention.
Fig. 3 is a flow chart of the processing made by a flash memory according to the present invention.

### DETAILED DESCRIPTION OF THE PREFERRED EMBODIMENTS

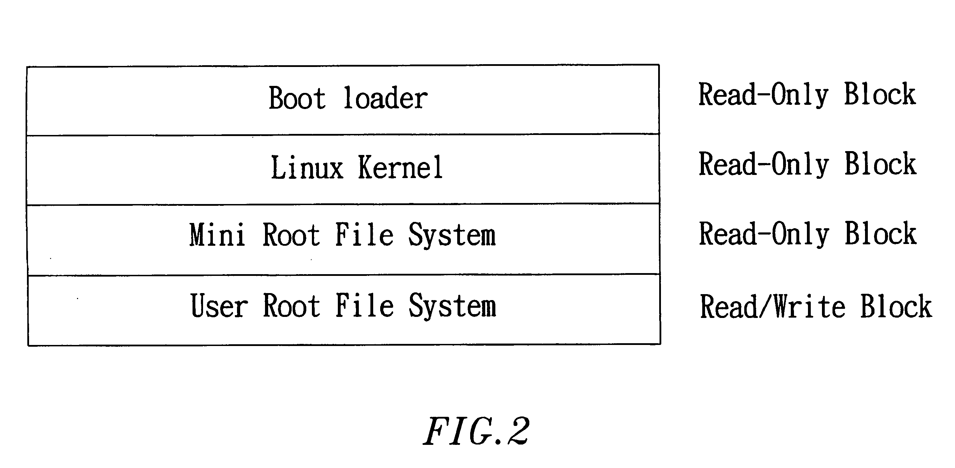

Referring to Fig 2, the method for restoring a booted system is to divide a flash memory of a device into four blocks, and stores a boot loader, a Linux kernel, a mini root file system and a user root file system of an embedded Linux system into the separate blocks, and the blocks stored with the boot loader, the Linux kernel and the mini root file system are set as read-only blocks, and the block stored with the user root file system is set as a read/write block, so that users can write other application programs such as JFFS2, EXT2 and EXT3 into the user root file system, and adds a detect program to the mini root file system. When the device is booted, the detect program will be executed first to detect whether or not the user root file system is damaged. If the user root file system is not damaged, the user root file system is used as the embedded Linux system. On the contrary, if the user root file system is damaged, the mini root file system will be used as the embedded Linux system. Such arrangement allows other application programs to be written into the user root file system. If the user root file system is damaged, the mini root file system will be used for the booting, and then the user root file system will be repaired, so as to prevent the device from being unusable.

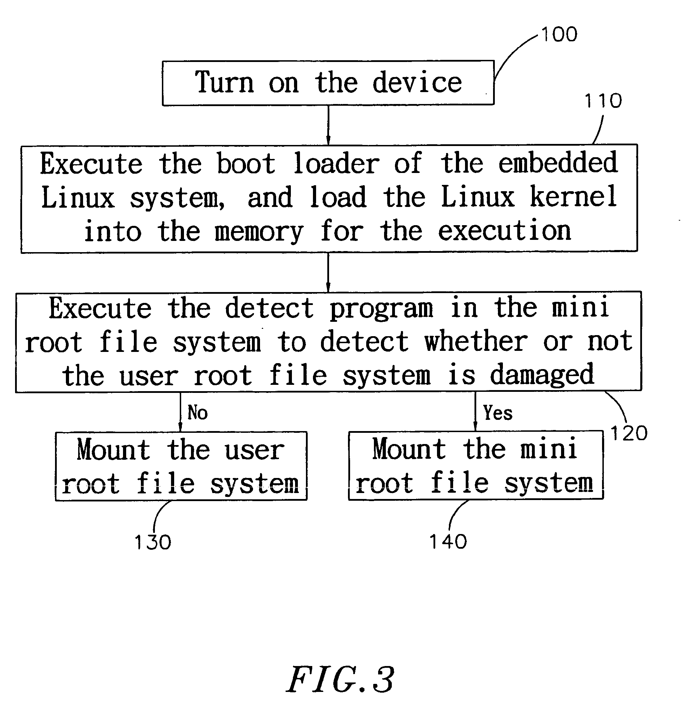

Refer to Figs. 2 and 3, if the device is booted, the embedded Linux system will carry out the following steps:
(100) turning on the device;
(110) executing the boot loader in the embedded Linux system, and loading the Linux Kernel into the memory for the execution;
(120) executing the detect program in the mini root file system to detect whether or not the user root file system is damaged; if the detected user root file system is not damaged, then carry out step (130); and if the detected user root file system is damaged, then carry out step (140);
(130) using the user root file system to mount the system; and
(140) using the mini root file system to mount the system.

Even if the user root file system is damaged, the embedded Linux system still can use the mini root file system to mount the system. After the device is booted, the user root file system can be repaired so as to avoid the situation of unable to use the device as it does in the prior art.

Further, when the detect program detects whether or not the user root file system is damaged, the user root file system will be mounted to a subdirectory of the mini root file system, and confirms whether or not the mount is successful. If the mount is successful, the detect program will continuing to determine whether or not the user root file system mounted to the subdirectory of the mini root file system is damaged. If the user root file system is not damaged, then the detect program will continue to check whether or not the user root file system includes programs such as sbin/init, bin/bash, bin/sh, and etc/inittab. If the user root file system includes all the aforementioned programs, then the user root file system is not damaged. If any of the foregoing programs detected by the detect program is missing, then the user root file system is damaged.

The main characteristic of the method for restoring a booted system in accordance with the present invention resides on dividing a prior art root file system into a mini root file system and a user root file system, and storing the mini root file system and the user root file system in a read-only block and a read/write block respectively, and adding a detect program in the mini root file system, such that when the device is booted, the detect program will be executed first to detect whether or not the user root file system is damaged. If the user root file system is not damaged, the user root file system will be used as the embedded Linux system. If the user root file system is damaged, the mini root file system will be used as the embedded Linux system. Therefore, other application programs can be written in the user root file system. Even if the user root file system is damaged, the mini root file system can be used for booting, and thus avoiding the device from being unusable at all.

## Claims

1. A method for restoring a booted operating system based on a Linux kernel for an embedded device and containing read-only and read/write flash memory storing a boot loader, a Linux kernel, a first root file system with reduced functionality and a second root file system, **characterized by** dividing the flash memory into four blocks, and three of said four blocks are read-only blocks and one of said four blocks is a read/write block, and storing the boot loader, the Linux kernel and the first root file system each into one of said read-only blocks, and storing the second root file system into said read/write block, and in that said first root file system includes a detect program which detects whether or not said second root file system is damaged, wherein when said device is booted, said boot loader is executed and said kernel and said first root file system are loaded into said flash memory for execution first, then, said detect program determines whether said second root file system is not damaged, and when this not file system is not damaged, said second root file system is mounted to a mount point of said first root file system.

2. The method for restoring a booted system as claimed in claim 1, **characterized in that** when said detect program detects whether or not said second root file system is damaged, said detect program checks whether or not said second root file system includes sbin/init, bin/bash, bin/sh and etc/inittab programs.

3. The method for restoring a booted system as claimed in claim 1, **characterized in that** when said detect program determines that said second root file system is damaged, then said first root file system will be mounted to said embedded Linux system.

## Patentansprüche

1. Verfahren zum Wiederherstellen eines geladenen Betriebssystems, das auf einem Linux-Kernel für eine eingebettete Einrichtung beruht und Nurlese- und Lese/Schreib-Flashspeicher enthält, die einen Wurzellader, einen Linux-Kernel, ein erstes Wurzeldateisystem mit reduzierter Funktionalität und ein zweites Wurzeldateisystem speichern, **gekennzeichnet durch** Aufteilen des Flashspeichers in vier Blöcke, und wobei drei der vier Blöcke Nurleseblöcke sind und einer der vier Blöcke ein Lese/Schreibblock ist, und **durch** Speichern des Wurzelladers, des Linux-Kernels und des ersten Wurzeldateisystems jeweils in einen der Nurleseblöcke, und **durch** Speichern des zweiten Wurzeldateisystems in den Lese/Schreibblock, und dass das erste Wurzeldateisystem ein Feststellungsprogramm einschließt, das feststellt, ob das zweite Wurzeldateisystem beschädigt ist oder nicht, wobei, wenn die Einrichtung geladen wird, der Wurzellader ausgeführt wird und der Kernel und das erste Wurzeldateisystem in den Flashspeicher zuerst für Ausführung geladen werden, wobei dann das Feststellungsprogramm bestimmt, ob das zweite Wurzeldateisystem nicht beschädigt ist, und wenn dieses Wurzeldateisystem nicht beschädigt ist, das zweite Wurzeldateisystem an einem Installationspunkt des ersten Wurzeldateisystems installiert wird.

2. Verfahren zum Wiederherstellen eines geladenen Systems nach Anspruch 1, **dadurch gekennzeichnet, dass,** wenn das Feststellungsprogramm feststellt, ob das zweite Wurzeldateisystem beschädigt ist oder nicht, das Feststellungsprogramm prüft, ob das zweite Wurzeldateisystem sbin/init, bin/bash, bin/sh und etc/innittab-Programme einschließt oder nicht.

3. Verfahren zum Wiederherstellen eines geladenen Systems nach Anspruch 1, **dadurch gekennzeichnet, dass,** wenn das Feststellungsprogramm bestimmt, dass das zweite Wurzeldateisystem beschädigt ist, dann das erste Wurzeldateisystem in dem eingebetteten Linuxsystem installiert wird.

## Revendications

1. Procédé pour restaurer un système d'exploitation amorcé basé sur un noyau Linux pour un dispositif incorporé et contenant une mémoire flash à lecture seule et lecture/écriture stockant un chargeur d'amorce, un noyau Linux, un premier système de fichiers racine avec une fonctionnalité réduite et un deuxième système de fichiers racine, **caractérisé par** les étapes consistant à diviser la mémoire flash en quatre blocs, et trois desdits quatre blocs sont des blocs à lecture seule et l'un desdits quatre blocs est un bloc à lecture/écriture, et stocker le chargeur d'amorce, le noyau Linux et le premier système de fichiers racine chacun dans l'un desdits blocs à lecture seule, et stocker le deuxième système de fichiers racine dans ledit bloc à lecture/écriture, et en ce que ledit premier système de fichiers racine comprend un programme de détection qui détecte si ledit deuxième système de fichiers racine est endommagé ou pas, dans lequel lorsque ledit dispositif est amorcé, ledit chargeur d'amorce est exécuté et ledit noyau et ledit premier système de fichiers racine sont chargés dans ladite mémoire flash pour une première exécution, ensuite, ledit programme de détection détermine si ledit deuxième système de fichiers racine n'est pas endommagé, et lorsque ce système de fichiers racine n'est pas endommagé, ledit deuxième système de fichiers racine est monté sur un point de montage dudit premier système de fichiers racine.

2. Procédé pour restaurer un système amorcé selon la revendication 1, **caractérisé en ce que** lorsque ledit programme de détection détermine si ledit deuxième système de fichiers racine est endommagé ou pas, ledit programme de détection vérifie si ledit deuxième système de fichiers racine comprend des programmes sbin/init, bin/bash, bin/sh et etc/inittab ou pas.

3. Procédé pour restaurer un système amorcé selon la revendication 1, **caractérisé en ce que** lorsque ledit programme de détection détermine que ledit deuxième système de fichiers racine est endommagé, alors ledit premier système de fichiers racine est monté sur ledit système Linux incorporé.
